# EUROPÄISCHE PATENTSCHRIFT

(11) **EP 1 062 445 B1**
(45) Veröffentlichungstag und Bekanntmachung des Hinweises auf die Patenterteilung: **16.04.2003**
(21) Anmeldenummer: 99906242.5
(22) Anmeldetag: 17.02.1999
(51) Int. Cl.: F16K 17/38

(54) **THERMISCHE ARMATURENSICHERUNG ZUM AUTOMATISCHEN ABSPERREN VON LEITUNGEN**
THERMAL SAFETY VALVE FOR AUTOMATICALLY SHUTTING OFF PIPES
SYSTEME DE SECURITE THERMIQUE POUR BLOCAGE AUTOMATIQUE DE CONDUITES

(30) Priorität: 10.03.1998 DE 19810223
(43) Veröffentlichungstag der Anmeldung: 27.12.2000
(73) Patentinhaber: Mertik Maxitrol GmbH & Co. KG, 06502 Thale (DE)
(72) Erfinder: SCHULZE, Klaus, D-06507 Gernrode (DE)
(74) Vertreter: Albrecht, Günter
(86) Internationale Anmeldenummer: EP9901035
(87) Internationale Veröffentlichungsnummer: WO99046527

(56) Entgegenhaltungen:
- EP-B- 0 605 551
- WO-A-97/33111
- DE-A- 4 422 241

## Beschreibung

### Technisches Gebiet

Die Erfindung betrifft eine thermische Armaturensicherung zum automatischen Absperren von Leitungen, insbesondere von Gasleitungen, beim Auftreten einer unzulässigen Temperaturerhöhung nach dem Oberbegriff des Anspruches 1.

### Stand der Technik

Solche thermischen Armaturensicherungen, die in Rohrleitungen, wie zum Beispiel vor Gasarmaturen, Gasgeräten, Gaszählern usw., eingesetzt werden, gibt es in einer Vielzahl von Ausführungen. Sie dienen dazu, bei einer Temperaturerhöhung die Gaszufuhr zu unterbrechen, bevor die Temperatur an den genannten Gasgeräten so hoch wird, daß deren äußere Dichtheit gefährdet ist.

So ist in der DE 44 22 241 A1 eine thermische Armaturensicherung der eingangs genannten Art beschrieben. Bei dieser Lösung wird im Gehäuse in axialer Verlängerung eines in ihm befindlichen Sitzes ein Schließkörper durch mindestens ein etwa U-förmig gebogenes Formteil in der Offenstellung gehalten. Der Schließkörper weist dazu im Anschluß an einen dem Sitz zugewandten Dichtungsbereich auf seiner dem Sitz abgewandten Seite eine Einschnürung auf, an die sich ein vorzugsweise zylindrischer Bund anschließt. Die beiden Schenkel des Formteiles befinden sich dabei im Bereich der Einschnürung und bilden so gegen die Kraft der Schließfeder eine Auflage für den Bund. Der die beiden Schenkel verbindende Teil des Formteiles stützt sich desweiteren an einem Thermolot ab, das seinerseits an der Innenwand des Gehäuses anliegt. Beim Wegschmelzen des Thermolotes befinden sich die Schenkel des Formteiles auf Grund der damit verbundenen Lageänderung des Formteiles im Gehäuse nicht mehr in der Einschnürung des Schließkörpers, so daß der Schließkörper unter der Einwirkung der Schließfeder seine Schließstellung einnimmt. Dabei bilden die Schenkel jeweils eine auf den Sitz gerichtete Führungsbahn für den Bund und/oder den Dichtungsbereich des Schließkörpers.

Bei dieser Lösung ist es von Nachteil, daß das Gehäuse neben dem Schließkörper viele Einbauten insbesondere im Umströmungsquerschnitt des Schließkörpers besitzt. Um die zum Beispiel in Normen festgeschriebenen oder in der Praxis gewünschten Durchflußwerte zu erreichen, ist man deshalb gezwungen die Baugröße entsprechend festzulegen. Das hat wiederum zur Folge, daß insbesondere für den Einbau ebenfalls geforderte und/oder gewünschte Baumaße nicht eingehalten werden können.

Desweiteren ist aus der EP - PS 605 551 ein sogenanntes Brandschutzventil mit Schließfeder zum automatischen Absperren von Leitungen bekannt. Bei diesem Brandschutzventil ist in einem Gehäuse ein metallischer Schließkörper angeordnet, der im Dichtungsbereich eine kugelförmige Gestalt besitzt, mit der er unter der Kraft einer Schließfeder in geöffneter Stellung auf drei Festpunkten, die durch zwei Kugeln und einem temperaturempfindlichen Bauelement gebildet werden, aufliegt. Dabei weisen die beiden Kugeln, die sich ihrerseits auf einem Absatz im Gehäuse abstützen, zueinander einen solchen Abstand auf, daß sie einen Öffnungswinkel von ca. 90° bilden. Gegenüber diesem Öffnungswinkel ist an der Innenwand des Gehäuses das temperaturempfindliche Bauelement befestigt.

Dieses besteht aus einem nach innen offenen Napf, der mit seinem Napfboden an der Innenwand befestigt ist. In dem radial nach innen offenen Napf befindet sich ein Schmelzlot, in das eine mit der Öffnung des Napfes eine Spielpassung bildende Kugel eingepreßt ist, die den dritten Festpunkt bildet, und die so bemessen ist, daß sie sich bei fehlendem Schmelzlot annähernd vollständig im Napf befindet. Der durch die drei Festpunkte gebildete Auflagedurchmesser für den metallischen Schließkörper ist dabei so bemessen, daß der Schließkörper, wenn sich die Kugel im Napf befindet, auf Grund der wirkenden Kraft der Schließfeder durch die zwischen den drei Festpunkten entstehende vergrößerte Öffnung hindurchgedrückt wird.

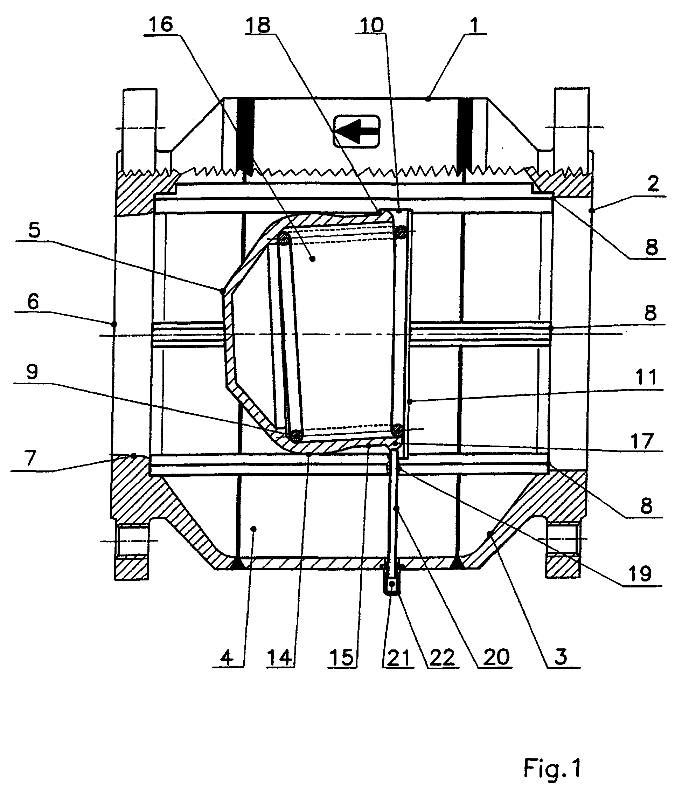

Wie auch aus der zugehörigen Figur 1 sehr gut zu erkennen ist, ist es bei dieser Lösung von Nachteil, daß der außermittig gelagerte Schließkörper bei der Durchführung der Schließbewegung nicht axial geführt ist. Wegen der auf Grund der vorhandenen Toleranzen niemals vollkommen axial wirkenden Kraftrichtung der Schließfeder kommt es bei der Schließbewegung der Kugel zu deren seitlicher Auslenkung. Der dadurch zwangsweise entstehende seitliche Aufprall und die damit notwendige Zentrierungsbewegung in den Sitz verbrauchen einen Teil der für die Erzielung eines Preßsitzes erforderlichen kinetischen Energie. Dieser Preßsitz ist jedoch erforderlich, wenn die thermische Armaturensicherung auch noch bei Temperaturen wirksam sein soll, bei denen die Schließfeder bereits kraftlos ist.

### Darstellung der Erfindung

Der Erfindung liegt das Problem zugrunde, eine thermische Armaturensicherung der genannten Art zu entwickeln, bei der die axiale Führung des Schließkörpers bei seiner Schließbewegung gewährleistet ist. Desweiteren soll die thermische Armaturensicherung im Bereich des Schließkörpers einen weitestgehend ungestörten Ringquerschnitt aufweisen. Der Herstellungsaufwand und die Baugröße sind so gering wie möglich zu halten.

Erfindungsgemäß wird das Problem dadurch gelöst, daß im Gehäuse drei oder mehr Stege derart angeordnet sind, daß ihre Längsachse parallel zur Schließrichtung des Schließkörpers ist, und daß jeder Steg eine Führungsbahn für den Schließkörper bei seiner Bewegung aus der Offen- in die Schließstellung bildet. In diese Stege sind desweiteren erste Nuten eingearbeitet, in denen ein Formteil gelagert ist, an dem sich die Schließfeder abstützt. Zumindest die dem Stößel etwa gegenüber angeordneten Stege weisen eine zweite Nut auf, die mit ihrer dem Sitz zugewandten Seite in Offenstellung des Schließkörpers eine Rastkante für die am Schließkörper befindliche Steuerkante bildet. Beim Wegschmelzen des Thermolotes erfolgt durch die wirkende Kraftkomponente der Schließfeder eine axiale Verschiebung des Stößels. Auf Grund dieser Lageänderung des Stößels liegt die Steuerkante nicht mehr an der Rastkante an, so daß der Schließkörper unter der Einwirkung der Schließfeder seine Schließstellung einnimmt.

Damit wurde eine Lösung gefunden, mit der die bisherigen Nachteile des Standes der Technik, daß das Gehäuse neben dem Schließkörper viele Einbauten insbesondere im Umströmungsquerschnitt des Schließkörpers besitzt und daß die Schließbewegung nicht genau axial verläuft, beseitigt. Weiterhin zeichnet sich diese Lösung vor allen Dingen durch ihre Einfachheit und die geringe Baugröße aus, was insbesondere für größere Nennweiten von Interesse ist, aus.

Weitere vorteilhafte Ausgestaltungen der Erfindung gehen aus den abhängigen Patentansprüchen hervor. So ist es beispielsweise möglich, die Rastkante für die Steuerkante in die dem Sitz zugewandte Seite der ersten Nut zu integrieren, wodurch der Herstellungsaufwand noch weiter minimiert wird, oder und den Stößel in einem der Stege zu lagern.

Um den Umströmungsquerschnitt optimal zu gestalten, ist es günstig, wenn die Stege durch Profilstangen gebildet werden, die einerseits in der Nähe des Sitzes und andererseits im Eingangsbereich des Gehäuses gelagert sind.

Eine insbesondere fertigungstechnisch vorteilhafte Lösung ergibt sich, wenn die Stege durch Rippen gebildet werden, die als einstückiger Guß mit dem Gehäuse verbunden sind.

Um vor allen Dingen die Montage sehr zu vereinfachen, kann das Formteil so ausgeführt sein, daß in der Nut eine Verdrehung des Formteiles möglich ist, wobei jedem Steg eine auf dem Formteil befindliche Kurvenbahn zugeordnet ist, deren kleinster Abstand zum Mittelpunkt des Formteiles kleiner als die Hälfte des durch die der Gehäuselängsachse zugewandten Seiten der Stege gebildeten Durchmessers ist, während der größte Abstand der Kurvenbahn etwa dem Abstand des Nutgrundes zur Gehäuselängsachse ist. Zusätzlich kann sich anschließend an diesen Abstand ein die Kurvenbahn begrenzender Zapfen befinden, der eine weitere Drehbewegung des Formteils in der Nut durch Anschlag an dem Steg begrenzt.

### Ausführungsbeispiel

Die Erfindung wird nachstehend an einem Ausführungsbeispiel näher beschrieben. Es zeigen:
- Fig. 1: eine erfindungsgemäße thermische Armaturensicherung im Schnitt in Offenstellung
- Fig. 2: eine separate Darstellung einer Ausführungsmöglichkeit eines Formteiles.

Die nachfolgend näher erläuterte und in der Figur 1 dargestellte erfindungsgemäße thermische Armaturensicherung besitzt ein rohrförmiges Gehäuse 1, das an beiden Enden jeweils einen Anschluß aufweist, der in diesem Fall durch eine Flanschverbindung dargestellt ist. Es versteht sich von selbst, daß auch ein anderer Anschluß möglich ist. Beide Flanschanschlüsse sind gasdicht mit dem Gehäuse 1 verbunden.

In Verlängerung der Einströmöffnung 2 schließt sich aus strömungstechnischen Gründen eine Erweiterung 3 an, die in den rohrförmigen Bereich 4 des Gehäuse 1 übergeht. Dabei ist die Kontur der Erweiterung 3 der Kontur eines weiter unten näher beschriebenen Schließkörpers 5 so angepaßt, daß ein optimaler Strömungsverlauf entsteht. An die Erweiterung 3 schließt sich der vor der Ausströmöffnung 6 angeordnete Sitz 7 an.

Im Bereich des rohrförmigen Bereiches 4 sind in diesem Ausführungsbeispiel vier Profilstangen 8 derart angeordnet, daß ihre Längsachse parallel zur Längsachse des Gehäuses 1 ist. Dabei sind die Profilstangen 8 einerseits in der Nähe des Sitzes 7 und andererseits in der Nähe der Einströmöffnung 2 gelagert und dort aus montagetechnischen Gründen, um ein Verschieben zu verhindern, günstigerweise zum Beispiel mittels Schweißen fest mit ihrer Lagerstelle verbunden. Der Abstand der Profilstangen 8 zur Gehäuselängsachse ist so gewählt, daß ein weiter unten näher erläuterter zylindrischer Schließkörper 5 in Längsrichtung des Gehäuses 1 beweglich geführt wird.

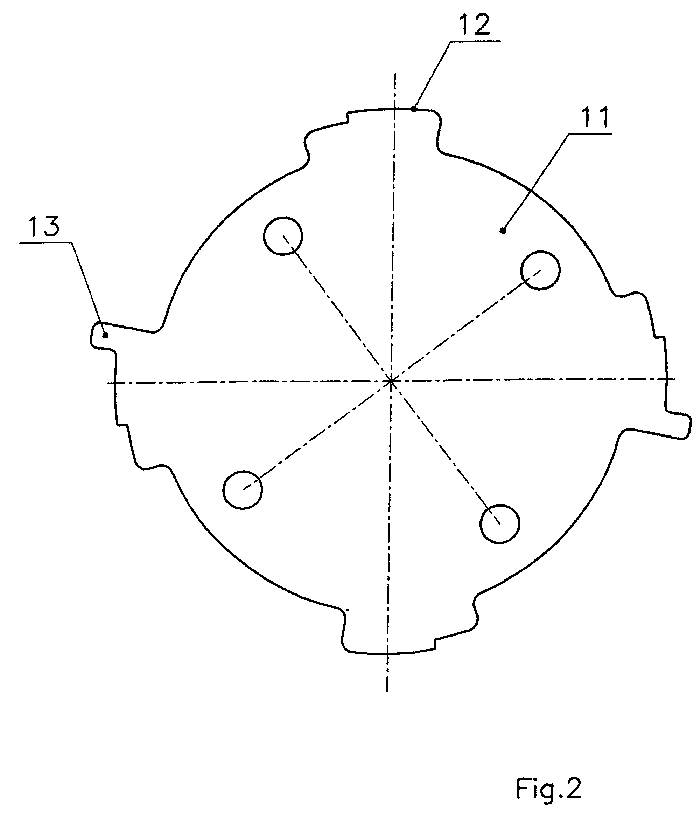

In jeder Profilstange 8 ist eine Nut 10 eingearbeitet, die zur Aufnahme eines vorzugsweise aus Blech hergestellten Formteiles 11, wie es in Fig.2 dargestellt ist, dient. Die dem Sitz 7 zugewandte Seite der Nut 10 weist bei einer Profilstange 8 eine Rastkante 18 auf. Die dieser mit der Rastkante 18 versehenen Profilstange 8 gegenüber angeordnete Profilstange 8 weist demgegenüber im Bereich der Nut 10 eine rechtwinklig zur Gehäuselängsachse verlaufende Querbohrung 19 auf.

Wie aus Fig. 2 ersichtlich, ist jeder Profilstange 8 auf dem Formteil 11 eine Kurvenbahn 12 zugeordnet, die maßlich so festgelegt ist, daß deren kleinster Abstand zum Mittelpunkt des Formteiles 11 kleiner als die Hälfte des durch die der Gehäuselängsachse zugewandten Seiten der Profilstangen 8 gebildeten Durchmessers ist, während der größte Abstand der Kurvenbahn 12 etwa dem Abstand des Nutgrundes der in den Profilstangen 8 befindlichen Nut 10 zur Gehäuselängsachse ist. Zusätzlich schließt sich bei in diesem Fall zwei gegenüberliegenden Kurvenbahnen 12 an diesen größten Abstand ein die Kurvenbahn 12 begrenzender Zapfen 13 an, der eine weitere Drehbewegung des Formteils 11 in den Nuten 10 durch Anschlag an der zugeordneten Profilstange 8 begrenzt.

Der weiter oben bereits erwähnte Schließkörper 5 weist in diesem Ausführungsbeispiel einen kugelförmigen Dichtbereich 14 auf, der in Richtung der Ausströmöffnung 6 aus strömungstechnischen Gründen etwa konisch ausläuft. In Richtung der Einströmöffnung 2 geht der kugelförmige Dichtbereich 14 in eine Einschnürung 15 über, deren Außendurchmesser wesentlich geringer ist als der Durchmesser des Sitzes 7. An seinem der Einströmöffnung zugewandten Ende weist der Schließkörper 5 einen umlaufenden Bund 17 auf, der günstigerweise mittels einer Schräge, die als Steuerkante dient, mit der Einschnürung 15 verbunden ist. In der der Einströmöffnung 2 zugewandten Stirnseite ist der Schließkörper 5 mit einer Sacklochbohrung 16 versehen, die eine Schließfeder 9 in gespannter Lage, d.h. in Offenstellung der Armaturensicherung, weitestgehend vollständig aufnimmt und in derem Grund sich die Schließfeder 9 abstützt, die mit ihrem anderen Ende am Formteil 11 anliegt. Ebenfalls in Offenstellung liegt der Schließkörper 5 mit der Steuerkante des Bundes 17 auf der Rastkante 18 auf.

Auf der Außenfläche des Schließkörpers 5 stützt sich im Bereich des Bundes 17 die Stirnseite eines Stößels 20 eines Fühlerelementes ab, der mit seinem anderen Ende auf einem Thermolot 21 aufliegt. Das Thermolot 21 ist günstigerweise in einem Napf 22 deponiert, der aus dem Gehäuse 1 herausragt, um eine möglichst kurze Ansprechzeit zu erreichen. Dabei ist die Gesamtlänge des Fühlerelementes so bemessen, daß sich durch den Stößel 20 der Schließkörper 5 im Bereich der Steuerkante so weit außermittig befindet, daß sich die Steuerkante wie bereits weiter oben dargestellt, unter der Kraft der Schließfeder 9 an der Rastkante 18 abstützt.

Die Wirkungsweise der erfindungsgemäßen thermischen Armaturensicherung ist wie folgt:

Beim Auftreten einer unzulässigen Temperaturerhöhung kommt es zum Schmelzen des Thermolotes 21. Damit wird der Stößel 20 unter der Kraft der Schließfeder 9 in den Napf 22 gedrückt. Auf Grund dieser Lageänderung des Stößels 20 gleitet die Steuerkante von der Rastkante 18 und der Schließkörper 5 wird durch die Kraft der Schließfeder 9 mit seinem kugelförmigen Dichtbereich 14 in den Sitz 7 gedrückt.

Während der Schließbewegung wird der Schließkörper 5 durch die Profilstangen 8 in axialer Richtung geführt, so daß radiale Auslenkungen des Schließkörpers 5, und die damit verbundenen negativen Auswirkungen auf die Dichtwirkung, vermieden werden.

Die erfindungsgemäße Armaturensicherung ist selbstredend nicht auf das dargestellte Ausführungsbeispiel beschränkt. Vielmehr sind Änderungen und Abwandlungen möglich, ohne den Rahmen der Erfindung zu verlassen. So können beispielsweise die mit Flanschen dargestellten Anschlüsse auch Innengewinde oder Außengewinde aufweisen. Femer kann der kugelförmige Dichtbereich 14 auch zum Beispiel kegelförmig ausgeführt sein

### Aufstellung der Bezugszeichen

- 1: Gehäuse
- 2: Einströmöffnung
- 3: Erweiterung
- 4: Rohrförmiger Bereich
- 5: Schließkörper
- 6: Ausströmöffnung
- 7: Sitz
- 8: Steg (Profilstange)
- 9: Schließfeder
- 10: Nut
- 11: Formteil
- 12: Kurvenbahn
- 13: Zapfen
- 14: Dichtbereich
- 15: Einschnürung
- 16: Sacklochbohrung
- 17: Bund
- 18: Rastkante
- 19: Querbohrung
- 20: Stößel
- 21: Thermolot
- 22: Napf

## Patentansprüche

1. Thermische Armaturensicherung zum automatischen Absperren von Leitungen, insbesondere von Gasleitungen, beim Auftreten einer unzulässigen Temperaturerhöhung, mit einem einen Sitz (7) aufweisenden Gehäuse (1) und einem im Gehäuse (1) in axialer Verlängerung des Sitzes (7) befindlichen metallischen Schließkörper (5), der im Anschluß an einen dem Sitz (7) zugewandten Dichtbereich (14) auf seiner dem Sitz (7) abgewandten Seite eine Einschnürung (15) aufweist, an die sich ein eine Steuerkante bildender Bund (17) anschließt, wobei der Schließkörper (5) unter der Kraft einer in Schließrichtung wirkenden Schließfeder (9), die sich im gespannten Zustand weitestgehend in einer Sacklochbohrung (16) des Schließkörpers (5) befindet, mittels eines einerseits an einem Thermolot (21) und andererseits an der Außenfläche des Schließkörpers (5) im Bereich des Bundes (17) anliegenden Stößels (20) in Offenstellung gehalten wird, **dadurch gekennzeichnet, daß** im Gehäuse (1) drei oder mehr Stege (8) derart angeordnet sind, daß ihre Längsachse parallel zur Schließrichtung des Schließkörpers (5) ist, so daß jeder Steg (8) eine Führungsbahn für den Schließkörper (5) bei seiner Bewegung aus der Offen- in die Schließstellung bildet, und daß in diese Stege (8) erste Nuten (10) eingearbeitet sind, in denen ein Formteil (11) gelagert ist, an dem sich die Schließfeder (9) abstützt, und daß zumindest die dem Stößel (20) etwa gegenüber angeordneten Stege (8) eine zweite Nut aufweisen, die mit ihrer dem Sitz (7) zugewandten Seite in Offenstellung des Schließkörpers (5) eine Rastkante (18) für die Steuerkante des Bundes (17) bilden, wohingegen beim Wegschmelzen des Thermolotes (21) auf Grund der damit verbundenen Lageänderung des Stößels (20) die Steuerkante nicht mehr an der Rastkante (18) anliegt, so daß der Schließkörper (5) unter der Einwirkung der Schließfeder (9) seine Schließstellung einnimmt.

2. Thermische Armaturensicherung zum automatischen Absperren von Leitungen nach Patentanspruch 1, **dadurch gekennzeichnet, daß** die Rastkante (18) für die Steuerkante in die dem Sitz (7) zugewandte Seite der ersten Nut (10) integriert ist.

3. Thermische Armaturensicherung zum automatischen Absperren von Leitungen nach Patentanspruch 1 oder 2, **dadurch gekennzeichnet, daß** der Stößel (20) in einem der Stege (8) gelagert ist.

4. Thermische Armaturensicherung zum automatischen Absperren von Leitungen nach einem der Patentansprüche 1 bis 3, **dadurch gekennzeichnet, daß** die Stege (8) durch Profilstangen (8) gebildet werden, die einerseits in der Nähe des Sitzes (7) und andererseits im Eingangsbereich des Gehäuses (1) gelagert sind.

5. Thermische Armaturensicherung zum automatischen Absperren von Leitungen nach einem der Patentansprüche 1 bis 4, **dadurch gekennzeichnet, daß** die Stege (8) durch Rippen gebildet werden, die als einstückiger Guß mit dem Gehäuse (1) verbunden sind.

6. Thermische Armaturensicherung zum automatischen Absperren von Leitungen nach einem oder mehreren der Patentansprüche 1 bis 5, **dadurch gekennzeichnet, daß** das Formteil (11) so ausgeführt ist, daß in der ersten Nut (10) eine Verdrehung des Formteiles (11) möglich ist, wobei jedem Steg (8) eine auf dem Formteil (11) befindliche Kurvenbahn (12) zugeordnet ist, deren kleinster Abstand zum Mittelpunkt des Formteiles (11) kleiner als die Hälfte des durch die der Gehäuselängsachse zugewandten Seiten der Stege (8) gebildeten Durchmessers ist, während der größte Abstand der Kurvenbahn (12) etwa dem Abstand des Nutgrundes zur Gehäuselängsachse entspricht

7. Thermische Armaturensicherung zum automatischen Absperren von Leitungen nach Patentanspruch 6, **dadurch gekennzeichnet, daß** sich anschließend an den größten Abstand ein die Kurvenbahn (12) begrenzender Zapfen (13) befindet, der eine weitere Drehbewegung des Formteils (11) in der Nut (10) durch Anschlag an dem Steg (8) begrenzt.

## Claims

1. Thermally triggered safety device to automatically shut off the fluid in pipelines, especially gas pipelines, in case of impermissible temperature rises, the a casing (1) of which has an integrated seat (7) and a metal closing body (5), that is located in axial extension to the seat (7), which has a sealing area (14) facing the seat (7), followed by a necking (15) on the closing body's side opposite to the seat, and a collar (17) that forms a control edge, by which the closing body (5) is kept in open position under the force exercised in closing direction by an closing spring (9), which under tension is sitting to a great extent inside a pocket hole (16), by means of a tappet (20) whose one end rests on a fusible soft solder component (21), and the other one on the closing body's (5) surface near the collar (17),
**CHARACTERIZED IN THAT** inside the casing (1) three or more ribs (8) are arranged with their longitudinal axes parallel to the closing body's (5) direction of movement when closing so that each rib (8) forms a slide-way for the closing body (5) moving from open into closed position, and there is cut into each of these ribs (8) a first groove (10) in which is placed a shaped part (11) that supports the closing spring (9), and at least the ribs (8) arranged approximately opposite to the tappet (20) have a second groove whose side facing the seat (7) forms a rest edge (18) on which the collar's (17) control edge may rest when the closing body (5) is in open position, whereas in case of melting away the fusible soft solder component (21), and the change of the tappet's (20) position as a consequence of this melting off, the control edge does no longer rest on the rest edge (18), and the closing body (5) driven by the closing spring (9) switches over into its close position.

2. Thermally triggered safety device to automatically shut off the fluid in pipelines according to patent claim no. 1, **CHARACTERIZED IN THAT** the rest edge (18), which supports the control edge, is integrated into the first groove's (10) lateral edge that faces the seat (7).

3. Thermally triggered safety device to automatically shut off the fluid in pipelines according to patent claim no. 1 or 2, **CHARACTERIZED IN THAT** the tappet (20) is placed inside one of the ribs (8).

4. Thermally triggered safety device to automatically shut off the fluid in pipelines according to one of the patent claims no. 1 through to and including 3, **CHARACTERIZED IN THAT** the ribs (8) are formed by section rods (8) that are supported both around the seat (7) and near the casing's (1) entrance area.

5. Thermally triggered safety device to automatically shut off the fluid in pipelines according to one of the patent claims no. 1 through to and including 4, **CHARACTERIZED IN THAT** the ribs (8) are formed by fins which are connected with the casing (1) in form of a single-piece casting.

6. Thermally triggered safety device to automatically shut off the fluid in pipelines according to one ore more of the patent claims no. 1 through to and including 5, **CHARACTERIZED IN THAT** the shaped part (11) is designed in a way that such shaped part's (11) twisting inside the first groove (10) is enabled, and an individual curved path (12) located on said shaped part (11) is assigned to each single rib (8), and the minimum distance between this curved path and the shaped part's (11) center is less than half the diameter created by the ribs' (8) edges alongside the casing's longitudinal axis, whereas the maximum distance between this curved path (12) and the shaped part's center nearly equals the distance between the groove's bottom and the casing's longitudinal axis.

7. Thermally triggered safety device to automatically shut off the fluid in pipelines according to patent claim no. 6, **CHARACTERIZED IN THAT** in said maximum distance a peg (13) may be fixed to limit the curved path (12) and the shaped body's (11) twisting movement inside the groove (10), with the rib (8) acting as a limit stop.

## Revendications

1. Dispositif thermique de sécurité servant à la fermeture automatique de tuyauteries, en particulier de tuyauteries de gaz, quand une augmentation inacceptable de température se produit, constitué d'un corps (1) présentant un siège (7) et dans le corps (1) en prolongation axiale du siège (7) un bloc de fermeture (5) qui en prolongation d'une zone d'étanchéité (14) tournée vers le siège (7) sur son côté opposé au siège (7) présente une gorge (15) sur laquelle se raccorde un bourrelet (17) formant une arête régulatrice, le bloc de fermeture (5) étant maintenu en position ouverte par la force d'un ressort de fermeture (9), agissant dans le sens de fermeture, et qui en état tendu se trouve pour l'essentiel dans un trou borgne (16) percé dans le bloc de fermeture (5) retenu d'une part par un brasage fusible (21) et d'autre part par un poussoir (20) situé sur la surface extérieure du bloc de fermeture (5) à proximité du bourrelet (17), **caractérisé par le fait que** dans le corps (1) trois ou plusieurs barrettes (8) sont disposées de telle sorte que leurs axes sont parallèles au sens de fermeture du bloc de fermeture (5), si bien que chaque barrette (8) forme une glissière pour le bloc de fermeture (5) dans son mouvement de la position ouverte en position fermée et que dans ces barrettes (8) des premières rainures (10) ont été usinées dans lesquelles un préformé (11) est logé sur lequel le ressort de fermeture (9) s'appuie, et qu'au moins les barrettes (8) situées à peu près en face du poussoir (20) portent une deuxième rainure qui avec son côté tourné vers le siège (7) forme, en position ouverte du bloc de fermeture (5), une arête de retenue (18) pour l'arête directrice du bourrelet (17), alors qu'au contraire, lorsque le brasage fusible (21) fond, en raison de la modification de la position du poussoir (20) en résultant, l'arête directrice ne repose plus sur l'arête de retenue (18), si bien que sous l'effet du ressort de fermeture (9) le bloc de fermeture (5) passe en position de fermeture.

2. Dispositif thermique de sécurité servant à la fermeture automatique de tuyauteries selon la revendication de brevet 1, **caractérisé par le fait que** l'arête de retenue (18) de l'arête directrice est intégrée dans le côté de la première rainure (10) tourné vers le siège (7).

3. Dispositif thermique de sécurité servant à la fermeture automatique de tuyauteries selon la revendication de brevet 1 ou 2, **caractérisé par le fait que** le poussoir (20) est logé dans une des barrettes (8).

4. Dispositif thermique de sécurité servant à la fermeture automatique de tuyauteries selon une des revendications de brevet de 1 à 3, **caractérisé par le fait que** les barrettes (8) sont constituées de barres profilées (8) logées d'une part à proximité du siège (7) et d'autre part dans la zone d'entrée du corps (1).

5. Dispositif thermique de sécurité servant à la fermeture automatique de tuyauteries selon une des revendications de brevet de 1 à 4, **caractérisé par le fait que** les barrettes (8) sont constituées de nervures en fonte d'une seule pièce qui sont reliées avec le corps (1).

6. Dispositif thermique de sécurité servant à la fermeture automatique de tuyauteries selon une des revendications de brevet de 1 à 5, **caractérisé par le fait que** le préformé (11) est exécuté de telle manière que dans la première rainure (10) une torsion du préformé (11) soit possible, chaque barrette (8) ayant à disposition une des voies incurvées (12) situées sur le préformé (11) et dont la distance la plus petite jusqu'au centre du préformé (11) soit plus petite que la moitié du diamètre formé par les côtés des barrettes (8) orientés vers l'axe longitudinal du corps, alors que la plus grande distance de la voie incurvée (12) est à peu près égale à la distance entre le fond de la rainure et l'axe longitudinal du corps.

7. Dispositif thermique de sécurité servant à la fermeture automatique de tuyauteries selon la revendication de brevet 6, **caractérisé par le fait qu'**au bout de la plus grande distance on trouve un tenon (13) qui limite la voie incurvée (12) et interdit que, butant sur la barrette, (8) le mouvement de torsion du profilé (11) se poursuive dans la rainure (10).
